# EUROPÄISCHE PATENTANMELDUNG

(11) **EP 1 634 807 A2**
(43) Veröffentlichungstag der Anmeldung: **15.03.2006**
(21) Anmeldenummer: 04022877.7
(22) Anmeldetag: 24.09.2004
(51) Int. Cl.: B62M 23/02, B62K 15/00

(54) **Fahrrad, insbesondere Klappfahrrad**

(30) Priorität: 10.09.2004 DE 202004014264 U
(71) Anmelder: Meyer, Uwe, 46147 Oberhausen (DE)
(72) Erfinder: Meyer, Uwe, 46147 Oberhausen (DE)
(74) Vertreter: Nunnenkamp, Jörg

(57) **Zusammenfassung**

Die Erfindung betrifft ein Fahrrad, insbesondere Klappfahrrad, mit einer durch menschliche Tretbewegung beaufschlagten Antriebseinheit (6, 7, 8), und mit einer Unterstützungseinheit (11, 12, 13, 14) mit Elektro-Hilfsmotor (12), welche eine Unterstützungskraft ergänzend zur menschlichen Tretkraft abgibt, dadurch gekennzeichnet, dass die Unterstützungseinheit (11, 12, 13, 14) nur dann arbeitet, wenn eine Sensoreinrichtung (15, 16) eine Tretbewegung registriert.

## Beschreibung

Die Erfindung betrifft ein Fahrrad, insbesondere Klappfahrrad, mit einer durch menschliche Tretbewegung beaufschlagten Antriebseinheit, und mit einer Untertützungseinheit mit Elektro-Hilfsmotor, welche eine Unterstützungskraft ergänzend zur menschlichen Tretkraft abgibt.

Solche Fahrräder mit Elektro-Hilfsmotor sind vielfältig bekannt, wozu nur beispielhaft auf die DE 697 16 167 T2 oder die 695 01 929 T2 hingewiesen sei. Im erstgenannten Fall ist eine Pedalkraft-Sensoreinrichtung vorgesehen, um die Pedalkraft zu erfassen und in Abhängigkeit hiervon die von dem Elektro-Hilfsmotor zur Verfügung gestellte Unterstützungskraft zuzuschalten. Ähnlich geht die DE 695 01 929 T2 vor, die eine Unterstützungsbeurteilungseinrichtung fordert. Vorgenannte Unterstützungsbeurteilungseinrichtung gibt ein Unterstützungsanforderungssignal solange aus, wie die Tretkraft einen Tretkraftbezugswert übersteigt.

Der Stand der Technik kann nicht in allen Punkten befriedigen, weil komplizierte Vorgehensweisen verfolgt werden, um die Tretkraft zu erfassen bzw. das Überschreiten eines Schwellwertes. Außerdem besteht ein Problem darin, dass bei wegfallender Tretkraft die Unterstützungskraft nach wie vor für Vortrieb sorgt bzw. sorgen kann. Dieser Umstand qualifiziert ein derartiges Fahrrad dann als Kraftfahrzeug, welches im öffentlichen Straßenverkehr nach deutschem Recht einer Betriebserlaubnis oder einer Zulassung bedarf. Beides führt zu erhöhten Kosten.

Der Erfindung liegt das technische Problem zugrunde, ein Fahrrad des eingangs beschriebenen Aufbaus so weiter zu entwickeln, dass ein kostengünstiger Betrieb bei einfachem Aufbau möglich ist und insbesondere eine Zulassung oder Betriebserlaubnis nicht erforderlich ist.

Zur Lösung dieser technischen Problemstellung ist ein gattungsgemäßes Fahrrad, insbesondere Klappfahrrad, im Rahmen der Erfindung dadurch gekennzeichnet, dass die Unterstützungseinheit nur dann arbeitet, wenn eine Sensoreinrichtung eine regelmäßig durchgängige Tretbewegung registriert. - Eine solche Sensoreinrichtung kommt zwar auch bei dem zuvor angegebenen Stand der Technik zum Einsatz, dient hier jedoch letztlich nur dazu, die Tretkraft zu erfassen und ggf. mit einem vorgegebenen Sollwert zu vergleichen. Demgegenüber kommt es erfindungsgemäß auf die Tretkraft überhaupt nicht an, sondern nur darauf, dass eine durchgängige oder überhaupt eine Tretbewegung seitens einer menschlichen Bedienperson vorliegt.

Diese (durchgängige) Tretbewegung (mit oder ohne Aufbringen einer Tretkraft) qualifiziert das erfindungsgemäße Fahrzeug nach wie vor als zulassungsfreies Fahrrad, welches keine Betriebserlaubnis benötigt. Denn die Unterstützungskraft ergänzt die menschliche Tretkraft nur und ausschließlich dann, wenn die beschriebene (durchgängige) Tretbewegung registriert wird. Sobald keine Tretbewegung mehr stattfindet, wird die Unterstützungseinheit und folglich der Elektro-Hilfsmotor abgeschaltet und kann dementsprechend keine Unterstützungskraft mehr aufbringen.

Um also die Vorteile des Elektro-Hilfsmotors der Unterstützungseinheit bei der Erfindung zu nutzen, ist es zwingend erforderlich, für eine menschliche Tretbewegung zu sorgen bzw. obligatorische Pedale in Rotation zu halten oder zu bringen. Das gilt insbesondere für eine Fahrt auf der Ebene sowie bei Steigungen. Gefällstrecken kann man dagegen so absolvieren, dass die Tretbewegung eingestellt wird, so dass auch die Unterstützungseinheit nicht mehr für einen ergänzenden Vortrieb sorgt.

Dabei sind die Antriebseinheit und die Unterstützungseinheit mechanisch getrennt voneinander ausgelegt und verfügen über zumindest einen Freilauf im Vergleich zum angetriebenen Rad, meistens dem Hinterrad. Es können auch zwei Freiläufe jeweils für die Antriebseinheit und die Unterstützungseinheit realisiert werden. Meistens greift man jedoch auf einen gemeinsamen Freilauf zurück, welcher sicherstellt, dass bei nicht angetriebenem Hinterrad dieses frei rotieren kann, ohne dass die Antriebseinheit und/oder die Unterstützungseinheit mitgenommen werden.

Um die (durchgängige) Tretbewegung zu registrieren, ist die Sensoreinrichtung vorteilhaft als Drehbewegungssensor ausgebildet. Das von diesem Drehbewegungssensor abgegebene Signal bzw. Drehbewegungssignal wird von einer Steuereinrichtung verarbeitet, an welche ausgangsseitig die Unterstützungseinheit bzw. der Elektro-Hilfsmotor angeschlossen sind. Nur wenn eine (durchgängige) Tretbewegung und folglich Drehbewegung von der Sensoreinrichtung registriert wird, erhält der Elektro-Hilfsmotor von der Steuereinrichtung ein Freigabesignal, kann also seine Unterstützungskraft abgeben. Sobald die Drehbewegung bzw. Tretbewegung nicht mehr vorliegt, endet das Freigabesignal und die Unterstützungseinheit stellt ihren Betrieb ein.

Bei dem Drehbewegungssensor handelt es sich im einfachsten Fall um einen Drehzahlsensor. Dieser mag zweiteilig mit Rotor und Stator ausgebildet sein, wobei der Rotor vorteilhaft als Scheibe und der Stator hauptsächlich als Bewegungen der Scheibe registrierender rahmenfester Sensor ausgeführt ist.

Denkbare Ausgestaltungen können so aussehen, dass die Scheibe auf ihrem Umfang gelocht ist und die einzelnen Löcher mit einer Lichtschranke abgefragt werden. Ausgangsseitig eines solchen Drehbewegungs- bzw. Drehzahlsensors liegt ein periodisches Rechtecksignal vor, welches beispielsweise mit Hilfe eines elektronischen Frequenzmessers in ein digitales Signal umgewandelt werden kann. Nur wenn eine Drehzahl größer Null seitens der Sensoreinrichtung erfasst wird, erhält die Unterstützungseinheit von der Steuereinrichtung das Freigabesignal.

Selbstverständlich kann anstelle mit umfangsseitigen Löchern auch mit anderen Marken auf der Scheibe bzw. dem Rotor gearbeitet werden. Denkbar und besonders bevorzugt sind kleine Permanentmagnete, die induktiv abgetastet werden und ähnliche Impulse wie bei der beschriebenen optischen Abtastung ausgangsseitig liefern. Das heißt, die Frequenz der Impulse ist der Drehzahl proportional. Dabei kann - wie bereits beschrieben - die Frequenz direkt gemessen werden, indem die Anzahl der Impulse während einer konstanten Zeitspanne (Torzeit) erfasst wird. Alternativ hierzu kann aber auch die Dauer zwischen zwei Impulsen gemessen und der Kehrwert gebildet werden, welcher wiederum der Drehzahl proportional ist.

So oder so verfügt die Sensoreinrichtung oder die Steuereinrichtung über den elektronischen Frequenzmesser, welcher die Drehzahl der Sensoreinrichtung ermittelt, die ihrerseits von der Antriebseinheit unmittelbar oder mittelbar über ein Verbindungsmittel angetrieben wird. Drehbewegungen der Antriebseinheit korrespondieren also zu Drehzahlsignalen an der Sensoreinrichtung und umgekehrt. Wenn solche Drehzahlsignale nicht vorliegen und folglich die Antriebseinheit nicht in Rotationen versetzt wird, so erhält der Elektro-Hilfsmotor bzw. die Unterstützungseinheit von der Steuereinrichtung kein Freigabesignal.

Im Detail ist die Sensoreinrichtung regelmäßig achsgleich im Vergleich zu einem Tretlager für die Antriebseinheit an einem Rahmen des Fahrrads angeordnet. Auf diese Weise wird der Rotor gleichphasig von einem an dieser Stelle üblicherweise realisierten Antriebszahnrad in Rotationen versetzt. Die Sensoreinrichtung wird also unmittelbar von der Antriebseinheit angetrieben. Grundsätzlich ist es aber auch möglich, die Sensoreinrichtung an einer anderen Stelle zu platzieren, wobei in diesem Fall ein Verbindungsmittel, beispielsweise eine Kette, ein Zahnriemen oder dergleichen zwischengeschaltet ist, welcher Drehbewegungen der im Tretlager obligatorisch gelagerten Pedale auf die Sensoreinrichtung überträgt.

Die Antriebseinheit und die Unterstützungseinheit arbeiten im Allgemeinen auf eine gemeinsame Hinterachse, und zwar mit jeweils unterschiedlichen Übersetzungen. Außerdem sind jeweils zwischengeschaltete unterschiedliche Antriebsmittel vorgesehen. Das heißt, die Antriebseinheit setzt sich aus einem Antriebsritzel, dem Antriebsmittel und einem Abtriebsritzel an der Hinterachse zusammen. Die Unterstützungseinheit verfügt ebenfalls über ein getrenntes und vom Elektro-Hilfsmotor beaufschlagtes Antriebsritzel, welches seine Kraft über ein anderes Antriebsmittel auf ein separates Abtriebsmittel an der Hinterachse überträgt. Bei dem jeweiligen Antriebsmittel kann es sich um eine Kette, einen Zahnriemen etc. handeln.

Schließlich empfiehlt die Erfindung, die Unterstützungseinheit bzw. den Elektro-Hilfsmotor zwischen einem Tretlager der Antriebseinheit und der Hinterachse anzuordnen, und zwar unmittelbar getragen von einem Rahmenunterzug. Dadurch wird eine besonders schwerpunktnahe Anordnung der Unterstützungseinheit gewährleistet, die folglich die Fahreigenschaften des Fahrrades praktisch nicht beeinflusst.

Im Ergebnis wird ein Fahrrad mit Elektro-Hilfsmotor zur Verfügung gestellt, welches sich zunächst einmal durch seinen kompakten und einfachen sowie folglich kostengünstigen Aufbau auszeichnet. Das erklärt sich im Kern aufgrund der Tatsache, dass die erfindungsgemäße Sensoreinrichtung lediglich eine (durchgängige) Tretbewegung einer Bedienperson registriert und auf komplizierte Auswertungen der Tretkraft verzichtet wird. Bei der Sensoreinrichtung kann also ein robuster und vielfach erprobter simpler Drehzahlsensor zum Einsatz kommen, welcher kostengünstig zu realisieren ist.

Von besonderer Bedeutung ist ferner der Umstand, dass die von der Unterstützungseinheit zur Verfügung gestellte Unterstützungskraft tatsächlich nur und ausschließlich dann die durch die menschliche Tretbewegung aufgebrachte Tretkraft unterstützt, wenn eine (durchgängige) Tretbewegung vorliegt. Das heißt, um von der Unterstützungskraft zu profitieren, muss ein Fahrer ständig treten. Hört der Fahrer dagegen mit der Tretbewegung auf, wird die Unterstützungseinheit und mit ihr der Elektro-Hilfsmotor gestoppt und unterbricht seine Arbeit. Auf diese Weise erlaubt dieses spezielle Antriebssystem, dass das beschriebene Fahrrad im öffentlichen Straßenverkehr betrieben werden kann, ohne dass es einer Betriebserlaubnis oder einer Zulassung bedarf. Auch ein Versicherungskennzeichen ist nicht erforderlich. Hierin sind die wesentlichen Vorteile zu sehen.

Im Folgenden wird die Erfindung anhand einer lediglich ein Ausführungsbeispiel darstellenden Zeichnung näher erläutert; es zeigen:

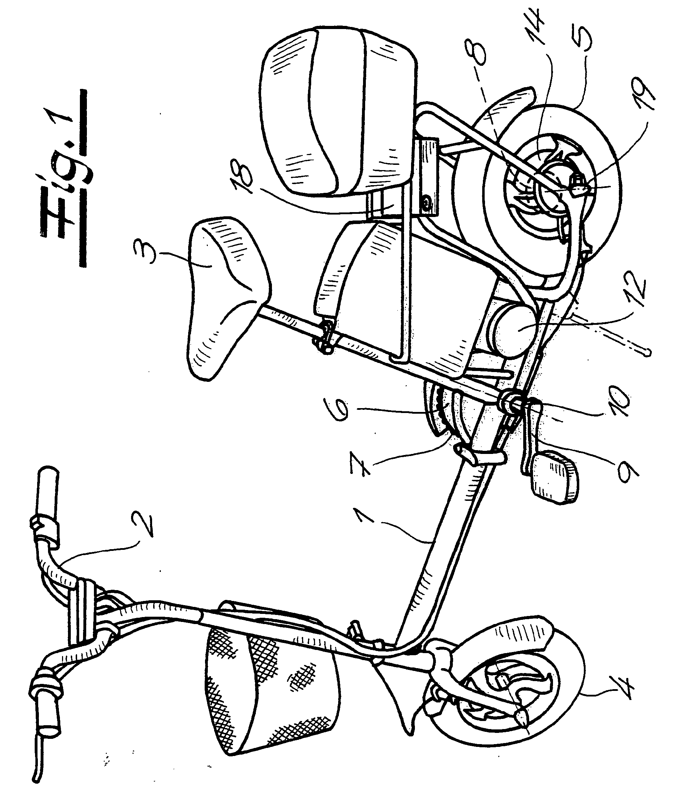

- **Fig. 1**: das erfindungsgemäße Fahrrad in einer perspektivischen Gesamtansicht,
- **Fig. 2**: eine Detailansicht der Antriebseinheit und Unterstützungseinheit,
- **Fig. 3**: einen Blick von unten auf die Unterstützungseinheit und
- **Fig. 4**: die Hinterachse in einem vergrößerten Ausschnitt.

In den Figuren ist ein Fahrrad dargestellt, bei dem es sich im Rahmen des Ausführungsbeispiels und nicht einschränkend um ein Klappfahrrad handelt.

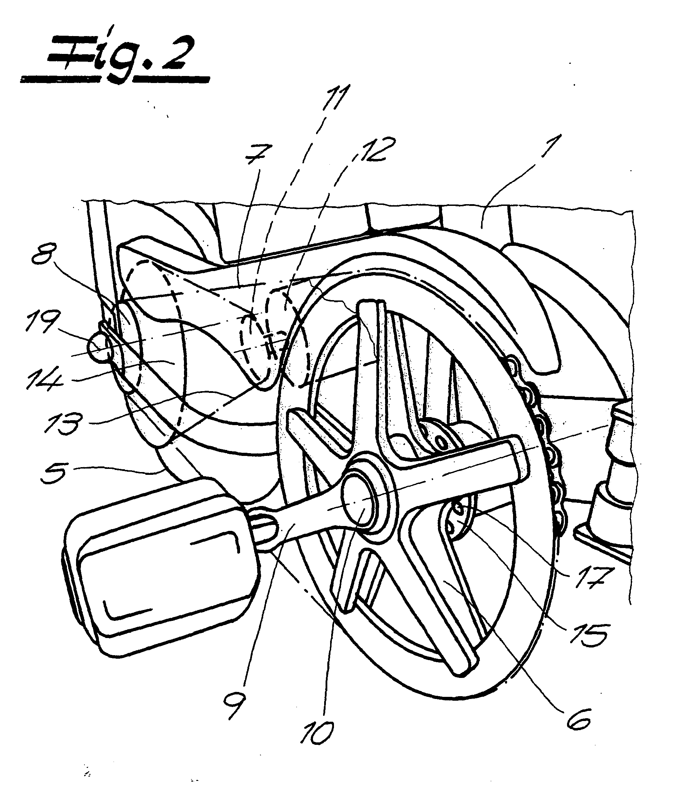

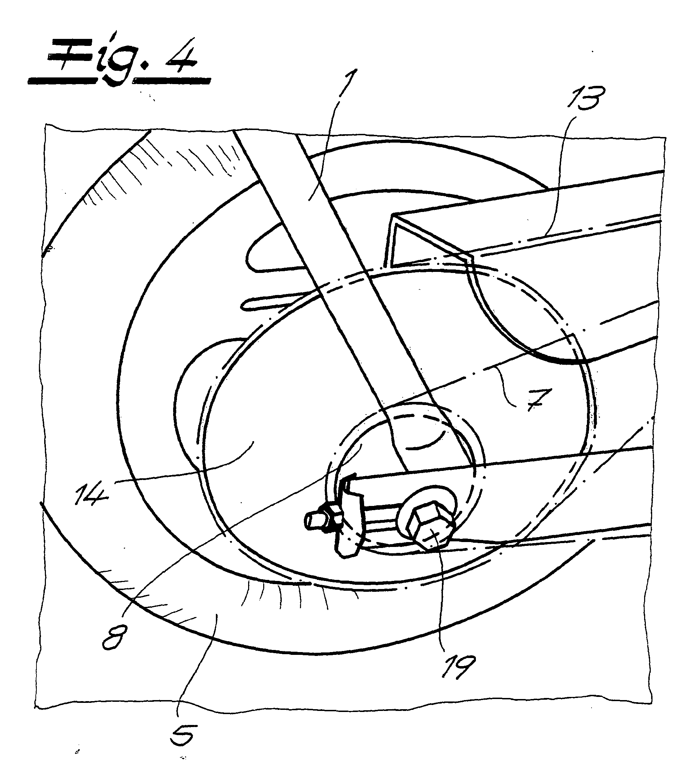

Dieses Fahrrad verfügt über einen Rahmen 1, einen Lenker 2, Sattel 3 sowie ein Vorderrad 4 und ein Hinterrad 5. Zum Antrieb des Hinterrades 5 ist zum einen eine durch menschliche Tretbewegung beaufschlagte Antriebseinheit 6, 7, 8 vorgesehen. Anhand der Fig. 2 und 4 erkennt man, dass sich die betreffende Antriebseinheit 6, 7, 8 im Wesentlichen aus einem Antriebsritzel 6, einem Antriebsmittel 7 und einem Abtriebsritzel 8 zusammensetzt. Das Antriebsritzel 6 wird durch zwei in einem Tretlager 10 gelagerter Pedale 9 wie bei einem Fahrrad üblich in Rotationen versetzt. Mit Hilfe des als Kette ausgebildeten Antriebsmittels 7 werden diese Rotationen des Antriebsritzels 6 auf das Abtriebsritzel 8 übertragen, welches das Hinterrad 5 antreibt.

Ergänzend zu dieser Antriebseinheit 6, 7, 8 ist zum anderen noch eine Unterstützungseinheit 11, 12, 13, 14 realisiert. Diese Unterstützungseinheit 11, 12, 13, 14 verfügt über einen Elektro-Hilfsmotor 12, welcher über ein weiteres Antriebsritzel 11, ein ergänzendes Antriebsmittel 13 und schließlich ein zusätzliches Abtriebsritzel 14 das Hinterrad 5 antreibt. Die Unterstützungseinheit 11, 12, 13, 14 gibt eine Unterstützungskraft zusätzlich zur menschlichen Tretkraft ab, die auf die Pedale 9 ausgeübt wird.

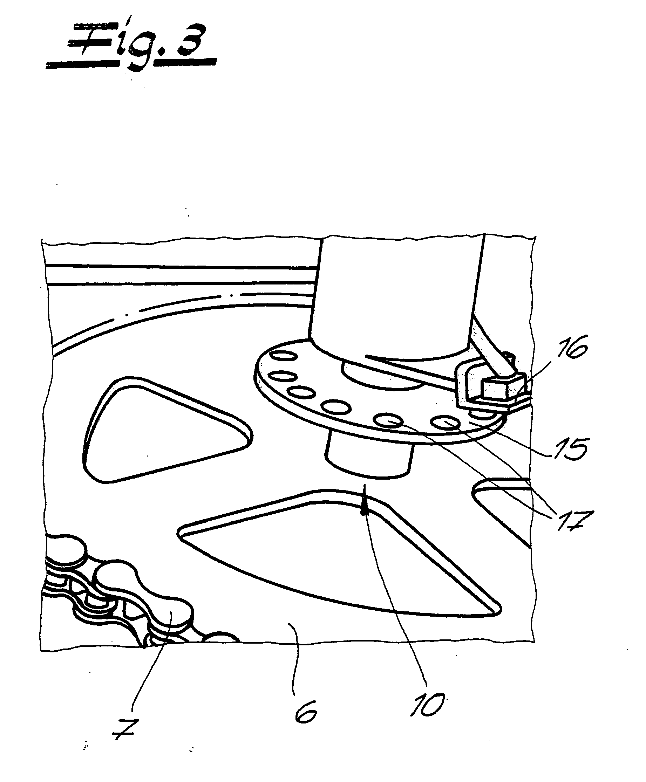

Erfindungsgemäß arbeitet die Unterstützungseinheit 11, 12, 13, 14 nur dann, wenn eine Sensoreinrichtung 15, 16 (vgl. Fig. 3) eine (durchgängige) Tretbewegung der Pedale 9 registriert. Dazu ist die Sensoreinrichtung 15, 16 als Drehbewegungssensor bzw. Drehzahlsensor 15, 16 ausgeführt, und zwar zweiteilig mit einem Rotor 15 und einem Stator 16. Der Stator 16 registriert Drehbewegungen des Rotors 15, welcher im Ausführungsbeispiel als Scheibe 15 ausgebildet ist, während der Stator 16 die Funktion eines Sensors 16 übernimmt.

Die Sensoreinrichtung 15, 16 wird unmittelbar von der Antriebseinheit 6, 7, 8 angetrieben. Das erreicht die Erfindung in der Weise, dass der Rotor 15 bzw. die Scheibe 15 der Sensoreinrichtung 15, 16 achsgleich zum Tretlager 10 in unmittelbarer Nachbarschaft zum Antriebsritzel 6 der Antriebseinheit 6, 7, 8 angeordnet ist, wie die Fig. 2 und 3 deutlich machen. Sobald also ein Fahrer die Pedale 9 in Rotation versetzt, wird nicht nur das Antriebsritzel 6 rotiert, sondern dies gilt ebenso und gleichphasig für den Rotor 15. Entsprechende Drehbewegungen des Rotors 15 erfasst der ortsfeste und am Rahmen 1 befestigte Stator 16 und gibt ausgangsseitig (rechteckige) Impulse ab. Diese resultieren dadurch, dass der Rotor 15 Marker 17 umfangsseitig aufweist, deren Drehbewegungen von dem Sensor 16 erfasst werden. Dabei kann die Drehzahl des Rotors 15 optisch, magnetisch oder ― wie im Beispielfall ― induktiv abgetastet werden. Hierzu sind die Marker 17 als (kleine und) in den Rotor 15 eingelassene Permanentmagnete ausgeführt, die sich mit geringem Spalt gegenüber dem mit einer Spule ausgerüsteten Sensor 16 bewegen und hier per Induktion die zuvor beschriebenen Impulse erzeugen.

Entweder in der Sensoreinrichtung 15, 16 oder in einer hiermit verbundenen Steuereinrichtung 18 können nun diese Impulse ausgewertet werden, indem auf die Drehzahl der Sensoreinrichtung 15, 16 rückgeschlossen wird. Falls die Sensoreinrichtung 15, 16 eine (durchgängige) Tretbewegung registriert bzw. überhaupt eine Tretbewegung und damit Rotation der Pedale 9, gibt die Steuereinrichtung 18 ein Freigabesignal an die Unterstützungseinheit 11, 12, 13, 14 ab. Dieses Freigabesignal betätigt den Elektro-Hilfsmotor 12, welcher über sein Antriebsritzel 11 das Antriebsmittel bzw. die Kette 13 und schließlich das Abtriebsritzel 14 ergänzend zu der Antriebseinheit 6, 7, 8 auf das Hinterrad 5 bzw. dessen Achse 19 arbeitet.

Dabei erkennt man anhand des Ausführungsbeispiels, dass die Antriebseinheit 6, 7, 8 und die Unterstützungseinheit 11, 12, 13, 14 mit unterschiedlichen Übersetzungen und jeweils verschiedenen Antriebsmitteln 7, 13 auf das Hinterrad 5 arbeiten bzw. dieses beaufschlagen. Nicht dargestellt ist ein Freilauf, welcher der Antriebseinheit 6, 7, 8 und/oder der Unterstützungseinheit 11, 12, 13, 14 zugeordnet ist und dafür sorgt, dass beispielsweise Bergabfahrten absolviert werden können, ohne dass die Antriebseinheit 6, 7, 8 und die Unterstützungseinheit 11, 12, 13, 14 mitgenommen werden.

Die Unterstützungseinheit 11, 12, 13 bzw. deren Elektro-Hilfsmotor 12 ist schwerpunktnah zwischen dem Tretlager 10 und der Hinterachse 19 des Hinterrades 5 angeordnet, so dass das Fahrrad vom Handling her einem solchen vergleichbar ist, welches über keinen Elektro-Hilfsmotor 12 verfügt.

## Patentansprüche

1. Fahrrad, insbesondere Klappfahrrad, mit einer durch menschliche Tretbewegung beaufschlagten Antriebseinheit (6, 7, 8), und mit einer Unterstützungseinheit (11, 12, 13, 14) mit Elektro-Hilfsmotor (12), welche eine Unterstützungskraft ergänzend zur menschlichen Tretkraft abgibt, **dadurch gekennzeichnet, dass** die Unterstützungseinheit (11, 12, 13, 14) nur dann arbeitet, wenn eine Sensoreinrichtung (15, 16) eine Tretbewegung registriert.

2. Fahrrad nach Anspruch 1, **dadurch gekennzeichnet, dass** die Sensoreinrichtung (15, 16) als Drehbewegungssensor (15, 16) ausgebildet ist.

3. Fahrrad nach Anspruch 1 oder 2, **dadurch gekennzeichnet, dass** die Sensoreinrichtung (15, 16) von der Antriebseinheit (6, 7, 8) unmittelbar oder mittelbar über ein Verbindungsmittel angetrieben wird.

4. Fahrrad nach einem der Ansprüche 1 bis 3, **dadurch gekennzeichnet, dass** die Sensoreinrichtung (15, 16) achsgleich zu einem Tretlager (10) für die Antriebseinheit (6, 7, 8) an einem Rahmen (1) angeordnet ist.

5. Fahrrad nach einem der Ansprüche 1 bis 4, **dadurch gekennzeichnet, dass** die Sensoreinrichtung (15, 16) zweiteilig mit Rotor (15) und Stator (16) ausgebildet ist.

6. Fahrrad nach Anspruch 5, **dadurch gekennzeichnet, dass** der Rotor (15) als Scheibe und der Stator (16) als Bewegungen der Scheibe (15) registrierender Sensor (16) ausgeführt sind.

7. Fahrrad nach einem der Ansprüche 1 bis 6, **dadurch gekennzeichnet, dass** die Antriebseinheit (6, 7, 8) und die Unterstützungseinheit (11, 12, 13, 14) auf eine gemeinsame Hinterachse (19) arbeiten.

8. Fahrrad nach einem der Ansprüche 1 bis 7, **dadurch gekennzeichnet, dass** die Antriebseinheit (6, 7, 8) und die Unterstützungseinheit (11, 12, 13, 14) mit unterschiedlichen Übersetzungen und jeweils verschiedenen Antriebsmitteln (7, 13) ein Hinterrad (5) antreiben.

9. Fahrrad nach einem der Ansprüche 1 bis 8, **dadurch gekennzeichnet, dass** die Antriebseinheit (6, 7, 8) und die Unterstützungseinheit (11, 12, 13, 14) mechanisch getrennt voneinander ausgelegt sind und wenigstens einen Freilauf aufweisen.

10. Fahrrad nach einem der Ansprüche 1 bis 9, **dadurch gekennzeichnet, dass** der Elektro-Hilfsmotor (12) der Unterstützungseinheit (11, 12, 13, 14) zwischen dem Tretlager (10) der Antriebseinheit (6, 7, 8) und der Hinterachse (19) angeordnet ist.
